(19) Europäisches Patentamt
European Patent Office
Office européen des brevets

(11) EP 1 268 679 B1

(12) # EUROPEAN PATENT SPECIFICATION

(45) Date of publication and mention of the grant of the patent:
**29.09.2004 Bulletin 2004/40**

(21) Application number: **01915932.6**

(22) Date of filing: **22.03.2001**

(51) Int Cl.$^7$: **C09D 4/06**, C09D 4/00, C08F 290/06, C08F 290/14, C03C 25/10

(86) International application number:
**PCT/NL2001/000237**

(87) International publication number:
**WO 2001/070642 (27.09.2001 Gazette 2001/39)**

(54) **RADIATION-CURABLE COATINGS SUITABLE FOR HIGH-SPEED APPLICATION ONTO OPTICAL FIBERS**

UV-STRAHLUNGSHÄRTBARE ZUSAMMENSETZUNGEN GEEIGNET ZUM AUFTRAGEN AUF OPTISCHE FASERN BEI HOHER GESCHWINDIGKEIT

REVETEMENTS PHOTODURCISSABLES ADAPTES A L'APPLICATION A VITESSE ELEVEE SUR FIBRES OPTIQUES

(84) Designated Contracting States:
**AT BE CH CY DE DK ES FI FR GB GR IE IT LI LU MC NL PT SE TR**

(30) Priority: **24.03.2000 US 191830 P**

(43) Date of publication of application:
**02.01.2003 Bulletin 2003/01**

(73) Proprietor: **DSM IP Assets B.V.**
**6411 TE Heerlen (NL)**

(72) Inventors:
- **SZUM, David, Michael**
**NL-2273 EG Voorburg (NL)**
- **JOHNSON, Robert, William**
**Algonquin, IL 60102 (US)**

(74) Representative: **Hoogendam, Gerrie Christine**
**DSM Intellectual Property**
**Office Geleen**
**P.O. Box 9**
**6160 MA Geleen (NL)**

(56) References cited:
**WO-A-99/10443**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 268 679 B1

## Description

### FIELD OF THE INVENTION

The present invention generally relates to optical fibers. More specifically, the invention concerns radiation-curable compositions useful in the production of coated optical fibers and optical fiber assemblies, such as ribbon assemblies and cables.

### BACKGROUND OF THE INVENTION

Coated optical glass fibers, typically bundled together to provide assemblies such as ribbon assemblies and cables, are used extensively in the telecommunications industry to transport large volumes of data over long distances. The ability of the assemblies to be property installed, and to then successfully transport data, depends in significant part on the performance of the two or more superimposed coatings that are applied onto the glass fiber strands.

In producing coated optical glass fibers, the first coating, which directly contacts the optical glass fiber, is commonly referred to as an inner primary coating (also referred to as simply a primary coating). This coating is usually a soft coating having a low glass transition temperature, and provides resistance to microbending. Microbending is undesirable, potentially leading to attenuation of the signal transmission capability of the optical fiber. Thereafter, and optionally, an outer primary coating (also referred to as a secondary coating) may be applied over the inner primary coating. This coating is typically harder than the inner primary coating, and provides resistance to handling.

Single-layer coatings can also be used to coat optical fibers. Single coatings generally have properties (e.g., hardness) that are intermediate to the properties of the softer inner primary and harder outer primary coatings.

Coated optical fibers (or waveguides) whether glass, or, as has come into use more recently, plastic, may also be colored to facilitate identification when they are gathered into assemblies. Coloration of the coated fibers is typically undertaken by applying an ink composition onto the outer surface of the coated optical fiber. Alternatively, a colorant may be incorporated to the outer primary coating to impart colored to the coated optical fiber.

To facilitate multi-channel transmission, optical fiber assemblies containing a plurality of the foregoing coated optical fibers are used. Examples of these assemblies include ribbon assemblies and cables. A typical ribbon assembly is prepared by arranging a plurality of coated optical fibers (from 2 to, typically, 24) in parallel, and applying a further type of coating composition, commonly referred to as matrix material, onto this arrangement. The matrix material is also radiation-curable, and, after curing, maintains the fibers in a spaced configuration, and protects the coated fibers during handling and installation. An example of a ribbon assembly is described in published European patent application No. 194891.

If desired, one or more ribbon assemblies may be arranged to provide a cable, as disclosed in, for example, U.S. Patent 4,906,067. Depending upon the application, a single cable may have from several to up to one thousand individually coated optical fibers.

The economics of the optical fiber industry demand that each of the foregoing coating compositions be applied onto optical fibers as quickly as possible. To achieve this objective, the industry presently relies upon radiation-curable coating compositions. These compositions are favored because, within a few seconds, they can be applied onto a fiber as a liquid and cured to provide a solid coating layer. This quick-curing property permits inner and outer primary coatings to be applied and cured in succession on a single optical fiber, even when the fiber is moving at speeds nearing 35 m/sec.

The preparation of coated optical fibers today involves passing the fibers through a coating die mounted within a device known as a draw tower. As the fibers pass through the die at high speed, however, certain problems arise. One significant problem concerns the degree of uniformity in the coating after curing. More specifically, in high quality coated fibers, the thickness of the coating layer possesses a high degree of uniformity along the length of the fiber. At high speeds, however, typically above about 35 m/sec, a combination of high fiber speed, relatively small clearance between the outer surface of the fiber and die, die length, pressure exerted on the composition as it is fed into the die, and properties of the uncured coating composition, can result in unacceptably low levels of uniformity in a cured coating.

Optical fibers with low levels of coating uniformity can present problems when one desires to splice two optical fibers together. Non-uniformity may also translate into data transmissions problems after installation into a data network, e.g., signal attenuation.

One means of addressing a coating uniformity problem is to redesign the draw tower and associated die. This remedy, however, is rarely used because draw towers are large, technologically sophisticated devices that can cost millions of dollars to design and build. Moreover, even if this remedy is adopted, it provides only temporary relief. The need to recoup the investment in a new draw tower will push the manufacturer to run the fiber through the tower at ever increasing speeds. Faster speeds will eventually lead to further problems in coating uniformity.

An altemative to draw tower and die redesign is to control, in some manner, the rheological properties of the uncured coating compositions. In this regard, it is understood that one rheological property, shear rate, increases

proportionally with increases in fiber speed. As the shear rate increases, the shear stress experienced by the composition also increases. At or near a limiting shear stress, which varies from coating to coating, an uncured coating exhibits an unacceptable degree of uniformity after curing. A coating that experiences shear stress below its limiting value, at relatively high shear rates (which increases with increasing line speed) is therefore highly desirable. Unfortunately, existing coatings have not overcome these and other problems.

The foregoing demonstrates a need for coating compositions that provide acceptable, and in certain areas improved, levels of performance in the foregoing and other respects as compared to known compositions, when the compositions are applied onto optical fibers traveling at relatively high speeds, and while experiencing relatively high shear rates. A further need exists for guidance as to how one can formulate such coating compositions, and how one can modify existing coating compositions to improve their performance before and during application, as well as after curing.

## SUMMARY OF THE INVENTION

The present invention meets the foregoing and other needs by providing, in one aspect, optical fiber coating compositions that remain below their individual limiting shear stress at relatively high shear rates. In a related aspect, the present invention provides optical fiber coating compositions that will permit draw towers to operate at relatively high line speeds without the expected undesirably high levels of non-uniformity, and its attendant problems, in the cured coating.

The invention is predicated, at least in part, on the discovery that the weight average molecular weight ($M_W$) of a certain class of components typically included in multi-component, radiation-curable, optical fiber coating compositions influences the shear stress experienced by the uncured coating when applied onto an optical fiber. It was further surprisingly discovered that the particular chemical composition of these certain components, and the identity of the other components in the coating, were not relevant factors in attaining the foregoing and other advantages of the present invention. In particular, it was found that these advantages could be obtained by controlling the $M_W$ of radiation-curable oligomers in an uncured optical fiber coating composition. These discoveries allow one skilled in the art to predict the shear stress that will be experienced by an uncured coating at high shear rates, and also provides the skilled artisan with the ability to formulate coatings that remain below their theoretical limiting shear stress even at relatively high shear rates, e.g., in the case of inner and outer primary coatings, when fiber line speed exceeds about 40 m/sec.

Prior to the discovery of the present invention, it was theorized that the shear stress of compositions consisting of a single high molecular weight polymer, e.g., polyethylene or polystyrene melts, could be controlled by adjusting the molecular weight distribution of the composition as a whole, expressed in terms of polydispersity, i.e., $M_W/M_N$.

In marked contrast, and as a further aspect of the present invention, it has been unexpectedly discovered that the foregoing theories involving polydispersity do not permit the formulation of radiation-curable optical fiber coating compositions that remain below the limiting shear stress at relatively high shear rates, and that provide the foregoing advantages. On the contrary, it has now been found that such coating compositions can be formulated by controlling the $M_W$ of only one of the components contained therein—the radiation-curable oligomers. Among others, an advantage of these inventive compositions is the resolution of uniformity problems in cured coatings that arise when the coating compositions are applied onto optical fibers at high shear rates, e.g., at high line speeds. The foregoing discovery was further unpredictable because reactive components other than the oligomers are typically included in significant quantity in optical fiber coating compositions, e.g., reactive diluents, colorants, photoinitiators, which, prior to the discovery of the present invention, would be expected to affect the properties of the composition as a whole.

It will be appreciated that another, yet related, aspect of the present invention is the provision of a technique by which existing radiation-curable coating compositions can be modified to provide coatings with improved properties even when the coatings are applied at relatively high shear rates.

Thus, and in accordance with one aspect of the present invention, there is provided a radiation-curable inner primary coating composition for optical fibers comprising at least one radiation-curable oligomer, wherein the value m of the uncured radiation-curable composition in the equation

$$\tau = \frac{K\lambda\gamma}{1+(\lambda\gamma)^m}$$

is equal to or greater than about 0.90. In the equation, $\tau$ is the shear stress of the composition in Pascals (Pa) and $\gamma$ is the apparent shear rate ($sec^{-1}$). K and $\lambda$ are constants which, along with the value m, are preferably calculated using a curve-fitting algorithm (the curve being drawn on a log/log scale) incorporated into a software program, after entry of corresponding shear stresses of the composition observed at varying (and relatively low) shear rates. From this

information, coating compositions can be formulated with particular attention given to the $M_W$ of the radiation-curable oligomer, and the performance of the coating composition at relatively high shear rates can be predicted and controlled.

Outer primary coatings, inks and matrix materials may also be formulated in accordance with the present invention. However, the value of m for each of the different coating compositions described herein will vary in order to maximize their performance (based upon the particular coating's intended purpose) at relatively high shear rates. Thus, for outer primary coatings, m is preferably equal to or greater than about 0.98, and about 0.96 for matrix material compositions.

As will be developed in more detail *infra,* the inventive compositions also provide at least one, and advantageously a combination of more than one, desirable performance characteristics, e.g., uniformity in cured coating thickness and cure rate. Moreover, and as will be further appreciated by those skilled in the art, the present invention provides a means of ensuring increased levels of consistency in coating performance on a batch-to-batch basis, as compared to the consistency of known coatings.

Related aspects of the present invention provide methods for applying such compositions onto optical fibers, optical fibers coated with the compositions, and ribbons and cables made using such coated optical fibers.

The invention may best be understood with reference to the accompanying figures and in the following description of the preferred embodiments.

## BRIEF DESCRIPTION OF THE FIGURES

FIGURE 1 is a shear stress/apparent shear rate curve set on a log/log scale for a particular illustrative uncured outer primary coating composition.

FIGURE 2 is a plot of the m value versus $M_W$ of oligomers for each of 19 different optical fiber coating compositions.

The present invention is described in the following paragraphs with an emphasis on preferred embodiments. However, it will be obvious to those of ordinary skill in the art that variations of the preferred embodiments may be successfully used, and that it is intended that the invention may be practiced otherwise than as specifically described herein. The inventive methods should therefore not be construed as being limited to the preferred embodiments described herein.

## DETAILED DESCRIPTION OF INVENTION

One aspect of the present invention provides inner and outer primary and matrix material compositions that, after curing, exhibit a high degree of uniformity after curing even when the coating is applied onto optical fibers at relatively high shear rates, e.g., such as those experienced at high optical fiber coating line speeds.

The foregoing and other advantages are provided in significant part by the selective incorporation of at least one radiation-curable oligomer into the compositions. In particular, and with respect to inner primary coatings, the oligomer should be selected so that the value m of an uncured radiation-curable inner primary coating composition in the equation

$$\tau = \frac{K\lambda\gamma}{1+(\lambda\gamma)^m} \qquad (I)$$

is advantageously equal to or greater than about 0.90. Preferably, and in the case of inner primary coatings, m may be greater than or equal to about 0.93, and most preferably equal to or greater than about 0.95.

In Equation I, $\tau$ is the shear stress of the composition in Pascals (Pa) and $\gamma$ is the apparent shear rate ($sec^{-1}$). K and $\lambda$ are constants which, along with the value m, are determined using a curve-fitting algorithm incorporated into a software program. More specifically, and as will be described in more detail in Example 1, after obtaining data on the shear stress of a composition at various apparent shear rates (the apparent shear rates being selected to generate shear stress values that are below the limiting shear stress of the composition), the data is preferably entered into a software program. The software program, using an algorithm, and given initial values for constants K and $\lambda$, calculates an m value (as well as final values for the constants K and $\lambda$) and plots a shear stress versus apparent shear rate curve on a log/log scale for the particular composition. Of course, the shear stress data points must include those obtained at relatively high apparent shear rates so that the curve, as plotted on a log/log scale from these data points, in fact provides a curved shape.

As previously mentioned, and in accordance with the present invention, the value m will vary with the type of

uncured radiation-curable coating composition, primarily due to the different performance required of each coating. In the case of outer primary coatings, the value m may advantageously be equal to or greater than about 0.98, and preferably equal to or greater than about 0.99. In the case of matrix materials, the value m may advantageously be equal to or greater than about 0.96, preferably equal to or greater than about 0.97, and most preferably equal to or greater than about 0.99.

The present invention permits the formulation of radiation-curable coating compositions that can be successfully applied onto optical fibers (glass or plastic) using draw towers under conditions that would create significant performance problems, e.g., non-uniformity, difficulty in splicing, excessive attenuation, low cure levels, if presently-available commercial compositions were used. By way of example, the present invention is able to provide coating compositions that, after curing, provide acceptable performance levels even when applied at line speeds of at least about 40 m/sec (advantageously at least about 45 m/sec, preferably at least about 50 m/sec, and most preferably at least about 55 m/sec) for inner and outer primary coatings, at least about 30 m/sec (advantageously at least about 35 m/sec, preferably at least about 40 m/sec, and most preferably at least about 45 m/sec) for inks and ink bases, and at least about 10 m/sec (advantageously at least about 15 m/sec, preferably at least about 20 m/sec, and most preferably at least about 25 m/sec) for matrix materials.

In formulating radiation-curable coatings of the present invention, one or more oligomers are provided. When the optional one or more reactive diluents (e.g., monomers) are included to assist in lowering the viscosity of the uncured compositions, one or both of these two types of components, alone or in combination, may constitute the majority components (on a wt.% basis) in the inventive compositions.

The amount of oligomer included in the uncured radiation-curable compositions may vary widely, but will typically be limited according to the performance requirements of the finished cured coating, and the relatively high viscosity of the oligomer. This being said, the oligomers will generally be present in the uncured compositions in an amount ranging up to about 90 wt.%, advantageously from about 10 wt. % to about 80 wt.%, preferably from about 30 wt.% to about 70 wt.%, and most preferably from about 40 wt.% to about 60 wt.%, based upon the total weight of the particular composition.

As the present invention concems controlling certain rheological properties of radiation-curable coatings, it is believed that the performance of these compositions is independent of the chemical structure of the particular oligomers selected for inclusion therein. Accordingly, one or more of a wide variety of radiation-curable oligomers may be selected for inclusion in the inventive coatings, so long as the advantages of the present invention are obtained. Illustrative oligomers useful in the inventive compositions include those containing at least one (meth)acrylic acrylate group, vinyl ether group or urethane group, with urethane oligomers being preferred.

Illustrative of suitable oligomers containing at least one (meth)acrylic acrylate group include those having at least two different ethylenic units based upon one or both of the following structures:

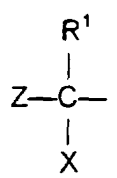

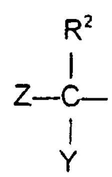

wherein $R^1$ and $R^2$ individually are H or $CH_3$; X is $-COOR^3$, wherein $R^3$ is H, a hydrocarbon group having n carbon atoms with n being an integer from 1 to 30, an aryl group, cyano group, halogen, or alkyl group having n carbon atoms with n being an integer of from 1 to 10; Y is a functional group containing a (meth)acryloyloxy group; and Z— individually is $CH_2$= or —$CH_2$—.

As previously mentioned, the preferred oligomers are the urethane oligomers. By way of background, a urethane is the product formed when an alcohol reacts with an isocyanate. In the context of the present invention, radiation-curable polyurethane oligomers are provided by reacting an alcohol, an isocyanate, and an isocyanate end-capping component that includes at least one radiation-curable group. Of course, isocyanate prepolymers may be used, alone or in combination. If desired, radiation-curable groups can also be included in the polyisocyanate and alcohol components.

A variety of alcohols may be used to provide urethane oligomers suitable for inclusion in the inventive compositions. These include, generally, hydrocarbon monols and diols, as well as polyester, polyether, polycarbonate, polycaprolactone and alkyd monols and diols, with polyether alcohols being preferred. The foregoing alcohols are well known, and may be prepared by any conventional method.

Polyether alcohols are preferred because they permit the preparation of the preferred polyether urethane

oligomers. Examples of suitable polyether alcohols include: alkoxylated bisphenol-A, polypropylene glycol, alkoxylated alkylphenol compounds, polytetramethylene glycol, copolymers of tetrahydrofuran and methyltetrahydrofuran, ethoxylated monoalcohols like ethoxyethoxy-2-ethylhexanol, alkoxylated trimethylolpropane, and the like, including mixtures thereof.

Suitable examples of hydrocarbon monols or polyols include: hexanol, cyclohexanol, 2-ethylhexanol, decylalcohol, stearylalcohol, hydrogenated polybutadienediol, hydrogenated-bisphenol-A, pentaerythritol, glycerol, trimethylol ethane or propane, ethylene glycol, propanediol, butanediol, heaxanediol, diethylene glycol, triethylene glycol, dipropylene glycol, neopentyl glycol, 2-butyl-2-ethyl-1,3-propanediol, hydroxypivaloyl hydroxypivalate, polyethylene glycol, polypropylene glycol, ethoxylated bisphenol-A wherein the number of ethylene oxide units is an integer from 2 to 12, propoxylated bisphenol-A wherein the number of propylene oxide units is an integer from 2 to 12, dipentaerythritol, sorbitol, and the like, including mixtures thereof.

Suitable examples of polyester alcohols include esterification products of diols and aliphatic or cyclic polycarboxylic acids. Examples of suitable polycarboxylic acids that may be used to provide exemplary polyester alcohols include: adipic acid, succinic acid, azeliac acid, sebacic acid, terephthalic acid, phthalic acid anhydride, decanoic-diacid, hexahydrophthalic acid, maleic acid anhydride, and the like, including mixtures thereof.

Suitable examples of polycaprolactone alcohols can be prepared from caprolactone, e.g., by ring opening polymerization of mono- di- or triols with caprolactone. Suitable alcohols include: butanol, hexanol, stearylalcohol, ethylene glycol, propylene glycol, trimethylolpropane, alkoxylated trimethylolpropane, and the like, including mixtures thereof.

Suitable examples of polycarbonate alcohols include polycarbonates based on 1,6-hexanediol, diethyleneglycol, 1,2-dodecaediol, bisphenol-A, and the like, including mixtures thereof.

The alkyd alcohols useful herein may be generally classified as polyester alcohols, but are distinguished from conventional polyesters by a pendant ester group protruding from a main polymer chain of ester linkages. The latter provides the alkyd alcohols with properties that are different from conventional polyester alcohols. The pendant ester group may be introduced by including a monofunctional carboxylic acid along with the other components used to prepare a polyester alcohol, e.g., a dicarboxylic acid and a diol. The alkyds may be prepared by polycondensation via either esterification or ester interchange.

Suitable monocarboxylic acids include $C_n$ acids, wherein n is an integer of from 4 to 28, and may be those derived from fats and oils. Preferably, however, the monoacid is a $C_n$ fatty acid, wherein n is an integer from 12 to 28, and may be fully saturated or unsaturated.

Examples of suitable oils that may be used to provide monocarboxylic acids are well known and include castor oil, com oil, cottonseed oil, rapeseed oil, low euric rapeseed oil, hempseed oil, kapok oil, linseed oil, wild mustard, oiticica oil, olive oil, palm oil, peanut oil, perilla oil, poppyseed oil, tobaccoseed oil, argentine rapeseed oil, rubberseed oil, safflower oil, sesame oil, soybean oil, sugarcane oil, sunflower oil, tall oil, teaseed oil, tung oil, black walnut oil, coconut oil, Babassu oil, Chinese tallow oil, Ouri-Curl oil, palm kernel oil, caprylic acid, caproic acid, capric acid, luric acid, coconut fatty acid, myristic acid, palmitic acid, stearic acid, and the like, and the hydrogenated form of the unsaturated oils and fatty acids described above, as well as mixtures thereof.

Turning to the isocyanate component, the present invention contemplates the use of cyclic (advantageously aromatic) isocyanates, non-aromatic isocyanates and mixtures thereof. The preferred isocyanates are the non-aromatic isocyanates, with aliphatic diisocyanates being most preferred. When the most preferred aliphatic diisocyanates are selected, one is able to prepare the most preferred oligomer component—an aliphatic polyether urethane oligomer.

Suitable non-aromatic isocyanates advantageously include those having $C_n$ carbon atoms, wherein n is an integer from 4 to 20. Such isocyanates preferably include, but are not limited to, aliphatic isocyanates such as 1,4-tetramethylene diisocyanate, 1,5-pentamethylene diisocyanate, 1,6-hexamethylene diisocyanate, 1,7-heptamethylene diisocyanate, 1,8-octamethylene diisocyanate, 1,9-nonamethylene diisocyanate, 1,10-decamethylene diisocyanate, 2,2,4-trimethyl-1,5-pentamethylene diisocyanate, 2,2,-dimethyl-1,5-pentamethylene diisocyanate, 3-methoxy-1,6-hexa-methylene diisocyanate, 3-butoxy-1,6-hexamethylene diisocyanate, dipropylether diisocyanate, trimethylhexamethylene diisocyanate, lysine diisocyanate and mixtures thereof.

Suitable cyclic (including aromatic) isocyanates include 2,4 toluene diisocyanate (TDI), 2,6-TDI, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, isophorone diisocyanate, 4,4'-biphenylene diisocyanate, methylene bis(4-cyclohexylisocyanate), bis(2-isocyanate-ethyl)fumarate, 6-isopropyl-1,3-phenyl diisocyanate, 4-diphenylpropane diisocyanate, dicyclohexylmethane-4,4'-diisocyanate, 1,4-cyclohexyl diisocyanate, 1,3-cyclohexyl diisocyanate, and mixtures thereof.

The isocyanate end-capping components useful in preparing oligomers in accordance with the present invention are those that include at least one radiation-curable group and at least one isocyanate-reactive group, e.g., hydroxyl-terminated. Advantageously, these components are (meth)acrylate alcohols. Suitable examples of these components include hydroxyalkyl (meth)acrylates such as hydroxyethyl (meth)acrylate, hydroxypropyl (meth)acrylate, hydroxybutyl (meth)acrylate and so forth, 2-hydroxy-3-phenyloxypropyl (meth)acrylate, 1,4-butanediol mono (meth)acrylate, 2-hydroxyalkyl(meth)acrylol phosphate, 4-hydroxycyclohexyl (meth)acrylate, 1,6-hexanediol mono(meth)acrylate, neopentylglycol mono(meth)acrylate, trimethylolpropane di(meth)acrylate, trimethylolethane di(meth)acrylate, pentaerythritol penta (meth)acrylate, compounds obtained by the addition polymerixation of a glycidyl group-containing compound, such as alkyl glycidyl ether, allyl glycidyl ether, or glycidyl (meth)acrylate and (meth)acrylic acid, as examples, as well as mixtures thereof.

The oligomers and certain optional components of the inventive coatings, e.g., reactive diluents and other optional additives such as dyes and silicones, are radiation-curable. This property is provided by certain functional groups that are capable of polymerization when exposed to actinic radiation, e.g., UV or electron beam radiation. Such radiation-curable groups are well known to those skilled in the art.

By way of example, a common group that provides oligomers and other optional components, e.g., reactive diluents, with the ability to be cured upon exposure to radiation is ethylenic unsaturation. Reactive components that include this group, in general, are polymerized via free radical polymerization, but can be polymerized by cationic polymerization. Illustrative of groups that are ethylenically unsaturated include (meth)acrylate, styrene, vinylether, vinyl ester, N-substituted acrylamide, N-vinyl amide, maleate ester, and fumarate ester. Other functionalities contemplated by the present invention that permit polymerization upon exposure to radiation include epoxy groups, as well as thiol-ene and amine-ene systems. Epoxy groups can be polymerized through cationic polymerization, whereas the thiol-ene and amine-ene systems are usually polymerized through radical polymerization. The epoxy groups can be, for example, homopolymerized. In the thiol-ene and amine-ene systems, for example, polymerization can occur between a group containing allylic unsaturation and a group containing a tertiary amine or thiol. Of the foregoing, vinylether and (meth)acrylate groups are preferably present in the radiation-curable components of the present invention, with the (meth)acrylates being most preferred. Mixtures of mono-, di-, tri-, tetra-, and higher functionalized oligomers and/or diluents can be used to achieve the desired balance of properties, wherein the functionalization refers to the number of radiation-curable groups present in the reactive component.

As mentioned previously, reactive diluents may be incorporated into the coatings primarily to counterbalance the high viscosity of the oligomers. In short, one of the functions of the diluents is to lower the viscosity of the overall composition to a level sufficient to permit the composition to be applied onto an optical fiber on a draw tower. Examples of suitable viscosities for the optical fiber coating compositions range from about 500 to about 50,000 centipoise at 25°C.

While any number of diluents may be introduced into the inventive coatings, the reactive diluent is advantageously a low viscosity monomer or mixture of monomers having at least one radiation-curable group. Keeping in mind the foregoing functions, reactive diluents may be present in the uncured inventive compositions in an amount effective to provide the composition with a viscosity within the foregoing ranges. Typically, these diluents will be present in the compositions in amounts up to about 70 wt.%, advantageously from about 5 wt.% to about 60 wt.% and more preferably from about 15 wt.% to about 50 wt.%, based on the total weight of the uncured composition.

By way of example, and without intending to limit the scope of reactive diluents suitable for use in the present invention, the reactive diluent can be a monomer or mixture of monomers having an acrylate or vinyl ether group and a $C_4$-$C_{20}$ alkyl or polyether moiety. Illustrative of such suitable reactive diluents include: hexylacrylate, 2-ethylhexylacrylate, isobomylacrylate, decylacrylate, laurylacrylate, stearylacrylate, 2-ethoxyethoxy-ethylacrylate, laurylvinylether, 2-ethylhexylvinyl ether, N-vinyl formamide, isodecyl acrylate, isooctyl acrylate, vinyl-caprolactam, N-vinylpyrrolidone, and the like, and mixtures thereof.

Another type of reactive diluent that can be used in the inventive compositions is a compound having an aromatic group. Particular examples of reactive diluents having an aromatic group include: ethyleneglycolphenylether acrylate, polyethyleneglycolphenylether acrylate, polypropyleneglycolphenylether acrylate, and alkyl-substituted phenyl derivatives of the above monomers, such as polyethyleneglycolnonylphenylether acrylate, and mixtures thereof.

The reactive diluent can also comprise a component having two or more functional groups capable of polymerization. Illustrative examples of such suitable diluents include: $C_n$ hydrocarbondioldiacrylates wherein n is an integer from 2 to 18, $C_n$ hydrocarbondivinylethers wherein n is an integer from 4 to 18, $C_n$ hydrocarbon triacrylates wherein n is an integer from 3 to 18, and the polyether analogues thereof, and the like, such as 1,6-hexanedioldiacrylate, trimethylolpropanetriacrylate, hexanedioldivinylether, triethyleneglycoldiacrylate, pentaerythritoltriacrylate, ethoxylated bisphenol-A diacrylate, and tripropyleneglycol diacrylate, and mixtures thereof.

If the radiation-curable group of the radiation-curable oligomer is an epoxy group, for example, one or more of the following compounds can be used as the reactive diluent: epoxy-cyclohexane, phenylepoxyethane, 1,2-epoxy-4-vinylcyclohexane, glycidylacrylate, 1,2-epoxy-4-epoxyethyl-cyclohexane, diglycidylether of polyethylene-glycol, diglycidylether of bisphenol-A, and the like.

If the radiation-curable group of the radiation-curable monomer or oligomer has an amine-ene or thiol-ene system, examples of reactive diluents having allylic unsaturation that can be used include: diallylphthalate, triallyltrimellitate, triallylcyanurate, triallylisocyanurate, diallylisophthalate, and mixtures thereof.

For amine-ene systems, other amine-functional reactive diluents that can be used include, for example: the

adduct of trimethylolpropane, isophoronediisocyanate and di(m)ethylethanolamine; the adduct of hexanediol, isophoronediisocyanate and dipropylethanolamine; and the adduct of trimethylol propane, trimethylhexamethylenediisocyanate and di(m)ethylethanolamine; and mixtures thereof.

The compositions may, if desired, further include one or more free-radical generating photoinitiators. These components are well known to those skilled in the art, and function to hasten the cure of the radiation-curable components in the coating compositions. Examples of suitable free radical-type photoinitiators include, but are not limited to, the following: isobutyl benzoin ether; 2,4,6-trimethylbenzoyl, diphenylphosphine-oxide; 1-hydroxycyclohexylphenyl ketone; 2-benzyl-2-dimethylamino-1-(4-morpholinophenyl)-butan-1-one; 2,2-dimethoxy-2-phenylacetophenone; perfluorinated diphenyl titanocene; 2-methyl-1-[4-(methylthio)phenyl]-2-(4-morpholinyl)-1-propanone; 2-hydroxy-2-methyl-1-phenyl propan-1-one; 4-(2-hydroxyethoxy)phenyl-2-hydroxy-2-propyl ketone dimethoxyphenylacetophenone; 1-(4-isopropylphenyl)-2-hydroxy-2-methylpropan-1-one; 1-(4-dodecyl-phenyl)-2-hydroxy-2-methylpropan-1-one; 4-(2-hydroxyethoxy)phenyl-2-(2-hydroxy-2-propyl)-ketone; diethoxyphenyl acetophenone; a mixture of (2,6-dimethoxy benzoyl)-2,4,4 trimethylpentylphosphine-oxide and 2-hydroxy-2-methyl-1-phenyl-propan-1-one; benzophenone; 1-propanone, 2-methyl-1-1-(4-(methylthio)phenyl)-2-(4-morpholinyl); and mixtures thereof.

The photoinitiators, if provided, may be present at levels of from about 0.1 wt.% to 10 wt.%, and advantageously from about 0.2 wt.% to about 5 wt.%, of an uncured coating composition, based upon the weight of the composition.

Other additives which can optionally be incorporated into the coating compositions in effective amounts include, but are not limited to, one or more colorants such as dyes, reactive-dyes, and pigments, catalysts, lubricants, adhesion promoters, wetting agents, antioxidants, stabilizers and mixtures of these additives. The selection and use of such additives is within the skill of the art.

If provided, the dyes and reactive dyes may be provided from about 0.1 wt.% up to about 40 wt.%, and advantageously from about 1 wt.% to about 30 wt.%; pigments from about 0.1 wt.% to about 40 wt.%, and advantageously from about 1 wt.% to about 30 wt.%; catalysts from about 0.1 wt.% to about 10 wt.%, and advantageously from about 0.5 wt.% to about 5 wt.%; lubricants from about 0.1 wt.% to about 5 wt.%, and advantageously from about 0.5 wt.% to about 3 wt.%; adhesion promoters (particularly useful in inner primary coating compositions) from about 0.1 wt.% to about 10 wt.%, and advantageously from about 0.5 wt.% to about 5 wt.%; wetting agents from about 0.1 wt.% to about 5 wt.%, and advantageously from about 0.1 wt.% to about 3 wt.%; antioxidants from about 0.1 wt.% to about 10 wt.%, and advantageously from about 0.5 wt.% to about 5 wt.%; and stabilizers from about 0.1 wt.% to about 10 wt.%, and advantageously from about 0.5 wt.% to about 5 wt.%,

It was further discovered that additional advantages in coating performance at high shear rates may be achieved by controlling the stoichiometry of the reaction, and thereby limiting the chain extension of the resulting oligomer. In particular, it was found that the oligomers useful herein advantageously average less than about two repeat units (± 0.5), preferably less than about 1.5 repeat units (± 0.5), and most preferably about one repeat unit (± 0.5).

For example, and in the case of the preferred urethane oligomers, it was surprisingly discovered that by initially reacting the end-capping component with the isocyanate compound using certain stoichiometric amounts, as opposed to initially reacting the polyol with the isocyanate, undesirable chain extension of the resulting oligomer can be avoided, i.e., the number of repeat units (polyol-isocyanate linkages) meets the foregoing parameters. In this example, a urethane oligomer is provided which, when formulated into a coating composition, provides the composition with an m value that correlates with enhanced performance.

More specifically, and in preparing the preferred urethane oligomer in accordance with the preferred process whereby the number of repeat units (chain extension) is limited, an end-capping component is provided that contains one group that is reactive with an isocyanate group (i.e., the end-capping group) and at least one radiation-curable group such as an acrylate, e.g., a mono- ol with a radiation-curable group. This component is reacted with a multifunctional isocyanate. To minimize the number of repeat units, the end-capping component is advantageously provided in sufficient quantity to end-cap all but one of the isocyanate groups on the multi-functional isocyanate component. From a stoichiometry perspective, to accomplish the foregoing when using a diisocyanate, for example, the end-capping component should be provided so that the ratio of end-capping group to isocyanate group ranges from greater than 1:1 to no greater than 1:2. This step provides an end-capped intermediate compound having acrylate and a single isocyanate group, the latter functioning in part to minimize undesirable chain extension.

In a second step, a polyol, preferably a diol, is reacted with the end-capped intermediate compound. When a diol is used, and in order to minimize chain extension, the diol is added to the end-capped intermediate in an amount that maximizes the quantity of one repeat unit radiation-curable urethane oligomer formed thereby. This preferred outcome is provided when the stoichiometric ratio of hydroxyl groups to isocyanate groups is at about 1:1.

The resulting compound is a urethane oligomer advantageously having a $M_W$ that does not exceed about 10,000. Preferably, and in the case of the preferred aliphatic polyether urethane oligomers, the $M_W$ should not exceed about 7500, and most preferably the $M_W$ should not exceed about 5000.

In another aspect of the present invention, it was surprisingly discovered that neither the type of radiation-curable oligomer, nor the weight percent of the oligomer in the uncured coating composition, affected coating performance at relatively high shear rates and stresses. On the contrary, it was determined that adjustment of the m value of a first uncured coating composition may be achieved by selecting oligomers having a $M_W$ that varies from those used in the first composition. More specifically, it was found that an increase in the m value of an uncured composition can be attained by lowering the $M_W$ of the oligomer therein. Conversely, the m value can be decreased by increasing the $M_W$ of the oligomer in the uncured compositions.

The discovery of a relationship between m and $M_W$ occurred using shear stress/shear rate data generated from 19 different uncured coating compositions which contained urethane oligomers. After an m value was generated for each composition, it was surprisingly discovered that variations in the m value corresponded most closely to variations in $M_W$ of the urethane oligomers. A plot of m value versus $M_W$ for the 19 compositions analyzed is shown in FIGURE 2. The lack of complete curve fit with the data points in FIGURE 2 is believed to be attributable to errors in measuring m and $M_W$.

The method of determining the m values is the same as that described in connection with Example 1. The theoretical maximum value for m is 1, although this value may be exceeded in practice due to experimental variations.

For purposes of the present invention, $M_W$ is defined as the weight average molecular weight of a component, typically an oligomer. When more than one oligomer is to be included in a coating composition, the $M_W$ of the oligomers for purposes of the present invention is the weighted average of each oligomer's individual $M_W$. For example, if oligomer A has $M_W$ of 1500 and will constitute 75 wt. % of the total oligomers in the uncured composition, and oligomer B has a $M_W$ of 2500 and will constitute 25 wt. % thereof, the $M_W$ of the oligomers for purposes of the present invention will be 1750. For purposes of the present invention, $M_W$ is determined by ASTM D5296-97, modified by using blends of polystyrenes of differing molecular weights as the standards. For example, Blend 1 consists of polystyrene standards having molecular weights of 1,000,000, 10,000, 2,000 and 230, Blend 2 consists of polystyrene standards having molecular weights of 500,000, 30,000 and 3,000, Blend 3 consists of polystyrene standards having molecular weights of 200,000, 13,000 and 154, and Blend 4 consists of polystyrene standards having molecular weights of 100,000 and 1,000.

In yet another aspect of the present invention, the compositions of the present invention provide a variety of desirable performance properties even when applied onto optical fiber at the high speeds referenced herein. For example, the average thickness of the coatings, after curing (and cleaning), remains substantially uniform along the length of the fiber. Advantageously, and for inner and outer primary coatings, the difference between the maximum and minimum diameters of each coating may vary by no more than ± 20μm, and preferably by no more than ± 10μm, based upon an examination of a 0.1-0.3 meter section of clean, coated optical fiber. Preferably, the difference between the maximum and minimum diameter of a colored optical fiber containing both a cured inner and a colored outer primary coating (only) may vary by no more than ± 20μm, and preferably by no more than ± 10μm, based again on a 0.1-0.3 meter section of clean, coated optical fiber. It should be understood that the maximum and minimum diameters of an optical fiber containing uncolored cured coatings may be translated into a corresponding colored fiber diameter measurements using an empirical function.

In determining the maximum and minimum coating thickness for these coated fibers, any suitable instrument or technique capable of measuring the foregoing may be utilized. By way of example, a microscope with at least 160X magnification, a device such as a video micrometer or a filar micrometer for obtaining accurate minimum and maximum diameter measurements along the length of the fiber undergoing testing, and a test fixture for holding the subject coated fiber during measurement (wherein the fiber is preferably immersed in a viscous liquid).

Once the fiber diameter measurements are obtained, an average coating thickness can be determined by substracting the fiber diameter from both the maximum and minimum coated fiber diameters, and dividing the difference between the resulting maximum and minimum coating thickness by two. For certain types of optical fibers, sometimes referred to as single mode fibers, the average diameter of a fiber having only inner and colored outer coatings may preferably range between 260 μm and 280 μm (±10).

The inventive coating compositions may advantageously exhibit yet another desirable characteristic, expressed as a percent of the radiation dose required to obtain an ultimate cure of the composition. For purposes of the present invention, the ultimate cure dose is defined as the radiation dose at which 95% of the modulus value for a particular cured coating is obtained.

For each coating composition to be tested, a series of cured films are prepared by exposing a series of uncured samples of the composition to the following radiation doses: (a) 0.3, 0.5, 0.75, 1.0, 2.0 and 3.5 $J/cm^2$, or (b) 0.2, 0.3, 0.5, 0.75, 1.0 and 2.0 $J/cm^2$. The former series of doses is used if the dose required to achieve full cure is about 3.5 $J/cm^2$, while the latter series is used if the dose is about 1.0 $J/cm^2$. Upon visual inspection, the film should be uniform and free of defects (e.g., air bubbles, gel or particulates).

Five test specimens from each cured film prepared as described above are obtained from the center portion of each film (e.g., 0.5 inch wide strips). A measurement of film thickness should be taken from the center area of each specimen to be tested to ensure uniformity. After the samples are obtained, they should be conditioned at 23°C (±1°)

and 50% (±5%) relative humidity for 16-24 hours, and should remain within these ranges during testing (unless the $T_g$ of the coating is far from 23°C, in which case the temperature limitations can be increased). Thereafter, the secant and/or segment modulus for each specimen may be obtained using a computer software program that converts data for the specimen obtained using a tension tester, such as Universal Testing Instrument, Instron Model 4201, 4442, 5564 or equivalent device. The device can be run at any suitable drawing rate, such as, for example, 1 mm/min. If the data from one sample deviates significantly from the data obtained from other samples in the same series, all data obtained from the testing of that sample should be discarded.

The average modulus (MPa) for each series of samples (again, each series corresponding to coating compositions cured using a particular radiation dose) and the corresponding dose (J/cm$^2$) are then plotted using a least squares fit of the non-linear equation using any suitable computer program (e.g., Sigma Plot™):

$$\text{Modulus} = K_1 \times [1\text{-}e^{(K_2 \times \text{dose})}]$$

In the above equation, the secant modulus should be used for relatively hard coatings, e.g., single-coat coating, outer primary coatings, some inner primary coatings, and the like, while the segment modulus should be used for relatively soft coatings, e.g., most inner primary coatings. The software program generates the constants $K_1$ and $K_2$ after entry of initial values therefor. The ultimate cure of the coating may then be obtained by determining the dose at which 95% of the ultimate secant (or segment) modulus is attained.

For each coating composition, the degree of cure is advantageously that attained by applying at least about 80%, preferably at least about 90%, and most preferably at least about 95%, of the radiation dose at which 95% of the ultimate secant (or segment) modulus for that composition is obtained, i.e., of the ultimate cure dose.

The inventive compositions, due at least in part to their batch-to-batch consistency and cured coating uniformity, further provide an installer with the ability to strip a coated fiber optic, and then splice or join one coated fiber optic to another, consistent with industry standards and practice.

The radiation-curable groups in the various components used to prepare the inventive compositions may be, but are not required to be, of the same type as that used in the radiation-curable oligomer. Preferably, however, the groups present in the various reactive components other then the oligomer (e.g., reactive diluents, reactive dyes and the like) is capable of copolymerizing with the radiation-curable group present on the radiation-curable oligomer.

The term $M_N$, as used herein, refers to the number average molecular weight of a component. The terms "shear rate" and "apparent shear rate" are used interchangeably herein and refer to the apparent shear rate of the composition, as opposed to the actual shear rate.

The following non-limiting examples will provide a further description of the concepts associated with the present invention.

<u>Example 1</u>

This example describes the procedure for obtaining an m value for an uncured, radiation-curable coating composition, whether it be a primary, secondary, ink or matrix composition.

About 200 ml of an uncured coating composition to be tested is introduced into a cup. The sample and cup are then placed in a temperature-controlled high-pressure chamber, along with the testing device, a PAAR HVA6 Capillary Viscometer.

This viscometer is provided with a capillary tube having a diameter of 0.6 mm and a length of 10 mm. A pressure transducer is provided to measure any pressure drop in liquid flowing through the capillary, and an optical flowmeter is provided in a burette connected to the capillary tube to measure the flow rate of the liquid through the capillary tube.

The temperature of the composition in the cup is then brought to 25°C.

After the temperature of the composition is attained, the pressure in the chamber is slowly increased by introducing either air or nitrogen under pressure into the chamber. As the pressure increases, the composition flows through the capillary, and into the burette. Data is collected as the pressure increases in the form of pressure drops and corresponding flow rate. Up to 15 to 20 data points may be obtained using this technique from a single filling of the cup. Data collection is stopped when the viscometer reaches a limit of either pressure or flow rate.

The foregoing test was completed on an uncured outer primary coating composition. The data obtained during that test is set forth in Table 1.

As with any viscometer, constants are provided which permit an operator to convert the pressure drop and flow rate data obtained during testing to shear stress and apparent shear rate, respectively. In the case of the particular viscometer used in this test, shear stress and apparent shear rate. For example, and referring to Table 1, the first pressure, 6.9 Bars, was multiplied by 1500 ($K_\tau$ to provide the corresponding first shear stress, 10350 Pa.

The first flow rate, 0.0306 cc/second, was multiplied by 47157 ($K_D$) to provide the first apparent shear rate, 1443 $sec^{-1}$.

Table 1

| Pressure [Bars] | Flow Rate [cc/sec] | Shear Stress [Pa] | Apparent Shear Rate [$sec^{-1}$] | Viscosity [Pa-sec] |
|---|---|---|---|---|
| 6.9 | 0.0306 | 10350 | 1443.0042 | 7.17254 |
| 9.8 | 0.044 | 14700 | 2074.908 | 7.08465 |
| 16.3 | 0.0738 | 24450 | 3480.1866 | 7.02549 |
| 23.7 | 0.1138 | 35550 | 5366.4666 | 6.62447 |
| 34 | 0.176 | 51000 | 8299.632 | 6.14485 |
| 49.2 | 0.2897 | 73800 | 13661.3829 | 5.40209 |
| 60.9 | 0.3985 | 91350 | 18792.0645 | 4.86109 |
| 70.4 | 0.542 | 105600 | 25559.094 | 4.1316 |
| 80 | 0.6726 | 120000 | 31717.7982 | 3.78336 |
| 91.9 | 0.9018 | 137850 | 42526.1826 | 3.24153 |
| 100.4 | 1.123 | 150600 | 52957.311 | 2.8438 |
| 109.9 | 1.447 | 164850 | 68236.179 | 2.41587 |
| 121.4 | 2.207 | 182100 | 104075.499 | 1.74969 |
| 133.9 | 3.258 | 200850 | 153637.506 | 1.3073 |
| 146.2 | 4.737 | 219300 | 223382.709 | 0.98172 |
| 155.6 | 6.037 | 233400 | 284686.809 | 0.81985 |
| 162.9 | 7.078 | 244350 | 333777.246 | 0.73208 |

The shear stress and apparent shear rate data was then used to obtain a curve. The curve fit was completed by entering the data into SlideWrite Plus (Advanced Graphics Software Inc., Encinitas, CA), with the apparent shear rate as the X-axis and the shear stress as the Y-axis. This software has the ability to provide the "best curve" fit to a non-linear equation specified by a user, given certain data points. The "best fit" curve can then be plotted on a graph.

In the present case, the non-linear equation is Equation I. Initial values are entered into the software for the constants K and λ as starting points only. The software will also provide a best value for these constants after it calculates the "best fit" curve based upon the data points and Equation I. The curve generated by the software using the shear stress/apparent shear rate data set forth in Table 1 is provided in FIGURE 1.

After finding the "best fit" curve, the software provides values for K, λ and, more importantly, m. However, as a "best fit" curve is generated, the values for K, λ and m are understood to include a variance in that number of ±0.015.

The actual values generated by the software for K, λ and m, and other statistics for pertaining to the data used in this Example are set forth in Table 2 below.

Table 2

| Variable | Value | Standard Error | t-Value | 95% Confidence | Limits |
|---|---|---|---|---|---|
| K | 197847 | 9866.5 | 20.052413 | 176683 | 219010 |
| λ | 0.000045 | 4.35e-06 | 10.324473 | 0.0000360 | 000054 |
| M | 0.897738 | 0.015022 | 59.760934 | 0.8655160 | 929961 |

Example 2

This example provides examples of preferred processing methodologies, including stoichiometry, useful in the preparation of preferred urethane oligomers.

A. Preparation of Oligomer A

An end-capping component, hydroxyethylacrylate (HEA), is reacted with 2,4-TDI in a hydroxy:isocyanate equivalents ratio of about 1:2, to provide an intermediate compound having acrylate and isocyanate groups. In a second step, a low molecular weight diol, polytetramethylene glycol ($M_W$ 650) is added to and reacted with the intermediate compound. The polyol is added in a hydroxy:hydroxy equivalents ratio of about 1:1 with respect to the end-capping component. The resulting compound is a urethane oligomer having two acrylate groups, and a $M_W$ of less than 10,000 (Oligomer A). An example of an outer primary coating composition and matrix material formulated using Oligomer A is set forth in Examplesr 3-B and 3-C, respectively.

B. Preparation of Oligomer B

HEA is reacted with isophorone diisocyanate, with the resulting intermediate being reacted with a polyether diol. The resulting oligomer (Oligomer B) has an average of about 1 repeat unit, a $M_W$ of less than about 7500, and is advantageously used in formulating inner primary coating compositions of the present invention. An example of an inner primary coating composition formulated using Oligomer B is set forth in Example 3-A below.

Example 3

This example provides illustrative formulations of primary, secondary and matrix compositions prepared in accordance with the present invention.

| A. Inner Primary Coating Composition | |
|---|---|
| Component | Wt.% |
| Oligomer B | 61.0 |
| Alkoxylated nonyl phenol acrylate | 30.0 |
| Octyldecyl acrylate | 6.0 |
| Diphenyl (2,4,6-trimethylbenzoyl)phosphine oxide and 2-hydroxy-2-methyl-1-phenyl-1-propanone | 1.7 |
| Thiodiethylene bis(3,5-di-tert-butyl-4-hydroxy)hydrocinnamate | 0.3 |
| 3-mercaptopropyl trimethoxy silane | 1.0 |
| Total | 100.0 |
| m = 0.96 | |

| B. Outer Primary Coating Composition | |
|---|---|
| Component | Wt.% |
| Oligomer A | 40.0 |
| Bisphenyl A diglycidyl ether diacrylate | 30.0 |
| N-vinyl caprolactam | 17.0 |
| Hexanediol diacrylate (HDDA) | 10.0 |
| 2-hydroxy-2-methyl-1-phenyl-1-propan-one | 3.0 |
| Total | 100.0 |
| m = 1.00 | |

| C. Matrix Material | |
|---|---|
| Component | Wt.% |
| Oligomer A | 60.00 |

(continued)

| C. Matrix Material | |
|---|---|
| Component | Wt.% |
| N-vinyl caprolactam | 12.00 |
| HDDA | 6.50 |
| THEICTA | 17.00 |
| Silicone-containing surfactant A | 0.64 |
| Silicone-containing surfactant B | 0.36 |
| 1-hydroxy-cyclohexyl-phenyl-ketone | 3.00 |
| Thiodiethylene bis(3,5-di-tert-butyl-4-hydroxy)hydrocinnamate | 0.50 |
| Total | 100.00 |
| m = 0.99 | |

The difference in m values for Compositions B and C is believed to be the result of experimental error.

Any reference cited herein, including patents, patent applications, and publications, are hereby incorporated in their entireties by reference. Further, any reference herein to a component in the singular is intended to indicate and include at least one of that particular component, i.e., one or more.

## Claims

1. A radiation-curable inner primary coating composition for optical fibers comprising at least one radiation-curable oligomer, wherein the value m of the uncured radiation-curable composition in the equation

$$\tau = \frac{K\lambda\gamma}{1+(\lambda\gamma)^m}$$

is equal to or greater than 0.93, wherein $\tau$ is the shear stress (Pa) and $\gamma$ is the apparent shear rate ($sec^{-1}$), and wherein K and $\lambda$ are constants which are calculated using a curve-fitting algorithm incorporated into a software program, after entry of corresponding shear stresses of the composition observed at varying shear rates.

2. The radiation-curable inner primary coating composition according to claim 1, wherein m is equal to or greater than 0.95.

3. A radiation-curable outer primary coating composition for optical fibers comprising at least one radiation-curable oligomer, wherein the value m of the uncured radiation-curable composition in the equation

$$\tau = \frac{K\lambda\gamma}{1+(\lambda\gamma)^m}$$

is equal to or greater than 0.98, wherein $\tau$ is the shear stress (Pa) and $\gamma$ is the apparent shear rate ($sec^{-1}$), and wherein K and $\lambda$ are constants which are calculated using a curve-fitting algorithm incorporated into a software program, after entry of corresponding shear stresses of the composition observed at varying shear rates.

4. The radiation-curable coating composition according to any one of claims 1-3, wherein the at least one radiation-curable oligomer contains at least one acrylate group.

5. The radiation-curable coating composition according to any one of claims 1-4, wherein the radiation-curable oligomer further contains at least one urethane group.

6. The radiation-curable coating composition according to any one of claims 1-5, wherein the radiation-curable oligomer acrylate contains an aliphatic polyether.

**7.** The radiation-curable coating composition according to any one of claims 1-6, wherein the least one radiation-curable oligomer includes, on average, no more than about 2 repeat units.

**8.** The radiation-curable coating composition according to any one of claims 1-7, wherein the at least one radiation-curable oligomer includes, on average, no more than about 1 repeat unit.

**9.** A method for preparing a coated optical fiber comprising: (a) applying a radiation-curable inner primary coating composition comprising at least one radiation-curable oligomer onto an optical fiber, wherein the value m of the equation

$$\tau = \frac{K\lambda\gamma}{1+(\lambda\gamma)^m}$$

is equal to or greater than 0.93, and (b) curing the radiation-curable coating composition to provide a coated optical fiber, wherein $\tau$ is the shear stress (Pa) and $\gamma$ is the apparent shear rate ($sec^{-1}$), and wherein K and $\lambda$ are constants which are calculated using a curve-fitting algorithm incorporated into a software program, after entry of corresponding shear stresses of the composition observed at varying shear rates.

**10.** The method according to claim 9, wherein the thickness of the radiation-cured coating on the coated optical fiber is substantially uniform.

**11.** The method according to any one of claims 9-10, wherein step (a) is conducted while the optical fiber is moving at a speed of at least 40 m/sec.

**12.** A method for preparing a coated optical fiber comprising: (a) applying a radiation-curable outer primary coating composition comprising at least one radiation-curable oligomer onto an optical fiber having an inner primary coating thereon, wherein the value m of the equation

$$\tau = \frac{K\lambda\gamma}{1+(\lambda\gamma)^m}$$

is equal to or greater than 0.98, and (b) curing the outer primary coating composition to provide the coated optical fiber, wherein $\tau$ is the shear stress (Pa) and $\gamma$ is the apparent shear rate ($sec^{-1}$), and wherein K and $\lambda$ are constants which are calculated using a curve-fitting algorithm incorporated into a software program, after entry of corresponding shear stresses of the composition observed at varying shear rates.

**13.** The method according to claim 12, wherein the combined thickness of the cured inner and outer coating compositions on the coated optical fiber is substantially uniform.

**14.** The method according to any one of claims 9-13, wherein at least 80% of the ultimate cure radiation dose for the coating composition is applied to the coating composition during step (b).

**15.** The method according to any one of claims 9-14, wherein step (a) is conducted while the optical fiber is moving at a speed of at least 45 m/sec.

**16.** The method according to claim 15, wherein step (a) is conducted while the optical fiber is moving at a speed of at least 50 m/sec, and at least 80% of the ultimate cure radiation dose for the outer coating composition is applied to the coating composition during step (b).

**17.** A method for preparing a ribbon assembly comprising: (a) applying a radiation-curable matrix material comprising at least one radiation-curable oligomer onto the exterior surface of a plurality of coated optical fibers, wherein the value m of the equation

$$\tau = \frac{K\lambda\gamma}{1+(\lambda\gamma)^m}$$

is equal to or greater than 0.96, and (b) curing the radiation-curable matrix material, wherein $\tau$ is the shear stress (Pa) and $\gamma$ is the apparent shear rate ($sec^{-1}$), and wherein K and $\lambda$ are constants which are calculated using a curve-fitting algorithm incorporated into a software program, after entry of corresponding shear stresses of the composition observed at varying shear rates.

**18.** The method according to claim 17, wherein m is equal to or greater than 0.98.

**19.** The method according to any one of claims 17-18, wherein the thickness of the cured matrix material on the ribbon assembly is substantially uniform.

**20.** The method according to any one of claims 17-19, wherein step (a) is conducted while the plurality of coated optical fibers is moving at a speed of at least 10 m/sec.

**21.** The method according to claim 20, wherein step (a) is conducted while the plurality of coated optical fibers is moving at a speed of at least 15 m/sec.

**Patentansprüche**

**1.** Durch Strahlung härtbare innere Primärbeschichtungszusammensetzung für optische Fasern, umfassend mindestens ein durch Strahlung härtbares Oligomer, wobei der Wert m der ungehärteten, durch Strahlung härtbaren Zusammensetzung in der Gleichung

$$\tau = \frac{K\lambda\gamma}{1+(\lambda\gamma)^m}$$

gleich oder größer als 0,93 ist, wobei $\tau$ die Scherspannung (Pa) ist und $\gamma$ die scheinbare Scherrate ($s^{-1}$) ist, und wobei K und $\lambda$ Konstanten sind, welche unter Verwendung eines Kurvenanpassungsalgorithmus, eingebracht in ein Softwareprogramm, nach Eingang von entsprechenden Scherspannungen der Zusammensetzung, beobachtet bei variierenden Scherraten, berechnet werden.

**2.** Durch Strahlung härtbare innere Primärbeschichtungszusammensetzung nach Anspruch 1, wobei m gleich oder größer als 0,95 ist.

**3.** Durch Strahlung härtbare äußere Primärbeschichtungszusammensetzung für optische Fasern, umfassend mindestens ein durch Strahlung härtbares Oligomer, wobei der Wert m der ungehärteten, durch Strahlung härtbaren Zusammensetzung in der Gleichung

$$\tau = \frac{K\lambda\gamma}{1+(\lambda\gamma)^m}$$

gleich oder größer als 0,98 ist, wobei $\tau$ die Scherspannung (Pa) ist und $\gamma$ die scheinbare Scherrate ($s^{-1}$) ist, und wobei K und $\lambda$ Konstanten sind, welche unter Verwendung eines Kurvenanpassungsalgorithmus, eingebracht in ein Softwareprogramm, nach Eingang von entsprechenden Scherspannungen der Zusammensetzung, beobachtet bei variierenden Scherraten, berechnet werden.

**4.** Durch Strahlung härtbare Beschichtungszusammensetzung nach einem der Ansprüche 1 bis 3, wobei das mindestens eine durch Strahlung härtbare Oligomer mindestens eine Acrylatgruppe enthält.

**5.** Durch Strahlung härtbare Beschichtungszusammensetzung nach einem der Ansprüche 1-4, wobei das durch Strahlung härtbare Oligomer weiter mindestens eine Urethangruppe enthält.

**6.** Durch Strahlung härtbare Beschichtungszusammensetzung nach einem der Ansprüche 1-5, wobei das durch Strahlung härtbare oligomere Acrylat einen aliphatischen Polyether enthält.

**7.** Durch Strahlung härtbare Beschichtungszusammensetzung nach einem der Ansprüche 1-6, wobei das mindestens eine durch Strahlung härtbare Oligomer im Durchschnitt nicht mehr als etwa zwei Wiederholungseinheiten einschließt.

**8.** Durch Strahlung härtbare Beschichtungszusammensetzung nach einem der Ansprüche 1-7, wobei das mindestens eine durch Strahlung härtbare Oligomer im Durchschnitt nicht mehr als etwa eine Wiederholungseinheit einschließt.

**9.** Verfahren zur Herstellung einer beschichteten optischen Faser, umfassend: (a) das Aufbringen einer durch Strahlung härtbaren inneren Primärbeschichtungszusammensetzung, umfassend mindestens ein durch Strahlung härtbares Oligomer, auf eine optische Faser, wobei der Wert m der Gleichung

$$\tau = \frac{K\lambda\gamma}{1+(\lambda\gamma)^m}$$

gleich oder größer als 0,93 ist und (b) das Härten der durch Strahlung härtbaren Beschichtungszusammensetzung unter Bereitstellung einer beschichteten optischen Faser, wobei $\tau$ die Scherspannung (Pa) ist und $\gamma$ die scheinbare Scherrate ($s^{-1}$) ist, und wobei K und $\lambda$ Konstanten sind, welche unter Verwendung eines Kurvenanpassungsalgorithmus, eingebracht in ein Softwareprogramm, nach Eingang von entsprechenden Scherspannungen der Zusammensetzung, beobachtet bei variierenden Scherraten, berechnet werden.

**10.** Verfahren nach Anspruch 9, wobei die Dicke der durch Strahlung gehärteten Beschichtung auf der beschichteten optischen Faser im wesentlichen einheitlich ist.

**11.** Verfahren nach einem der Ansprüche 9-10, wobei der Schritt (a) durchgeführt wird, während sich die optische Faser mit einer Geschwindigkeit von mindestens 40 m/s bewegt.

**12.** Verfahren zur Herstellung einer beschichteten optischen Faser, umfassend: (a) das Aufbringen einer durch Strahlung härtbaren äußeren Primärbeschichtungszusammensetzung, umfassend mindestens ein durch Strahlung härtbares Oligomer, auf eine optische Faser mit einer inneren Primärbeschichtung darauf, wobei der Wert m der Gleichung

$$\tau = \frac{K\lambda\gamma}{1+(\lambda\gamma)^m}$$

gleich oder größer als 0,98 ist und (b) das Härten der äußeren Primärbeschichtungszusammensetzung unter Bereitstellung der beschichteten optischen Faser, wobei $\tau$ die Scherspannung (Pa) ist und $\gamma$ die scheinbare Scherrate ($s^{-1}$) ist, und wobei K und $\lambda$ Konstanten sind, welche unter Verwendung eines Kurvenanpassungsalgorithmus, eingebracht in ein Softwareprogramm, nach Eingang von entsprechenden Scherspannungen der Zusammensetzung, beobachtet bei variierenden Scherraten, berechnet werden.

**13.** Verfahren nach Anspruch 12, wobei die kombinierte Dicke der gehärteten inneren und äußeren Beschichtungszusammensetzungen auf der beschichteten optischen Faser im wesentlichen einheitlich ist.

**14.** Verfahren nach einem der Ansprüche 9-13, wobei mindestens 80% der Härtungsbestrahlungsenddosis für die Beschichtungszusammensetzung während Schritt (b) auf die Beschichtungszusammensetzung angewendet wird.

**15.** Verfahren nach einem der Ansprüche 9-14, wobei Schritt (a) durchgeführt wird, während sich die optische Faser mit einer Geschwindigkeit von mindestens 45 m/s bewegt.

**16.** Verfahren nach Anspruch 15, wobei der Schritt (a) durchgeführt wird, während sich die optische Faser mit einer Geschwindigkeit von mindestens 50 m/s bewegt und mindestens 80% der Härtungsbestrahlungsenddosis für die Beschichtungszusammensetzung während Schritt (b) auf die Beschichtungszusammensetzung angewendet wird.

**17.** Verfahren zur Herstellung einer Bandeinheit, umfassend: (a) das Aufbringen eines durch Strahlung härtbaren Matrixmaterials, umfassend mindestens ein durch Strahlung härtbares Oligomer, auf die äußere Oberfläche einer Vielzahl von beschichteten optischen Fasern,-wobei der Wert m der Gleichung

$$\tau = \frac{K\lambda\gamma}{1+(\lambda\gamma)^m}$$

gleich oder größer als 0,96 ist und (b) das Härten des durch Strahlung härtbaren Matrixmaterials, wobei $\tau$ die Scherspannung (Pa) ist und $\gamma$ die scheinbare Scherrate ($s^{-1}$) ist, und wobei K und $\lambda$ Konstanten sind, welche unter Verwendung eines Kurvenanpassungsalgorithmus, eingebracht in ein Softwareprogramm, nach Eingang von entsprechenden Scherspannungen der Zusammensetzung, beobachtet bei variierenden Scherraten, berechnet werden.

**18.** Verfahren nach Anspruch 17, wobei m gleich oder größer als 0,98 ist.

**19.** Verfahren nach einem der Ansprüche 17-18, wobei die Dicke des gehärteten Matrixmaterials auf der Bandeinheit im wesentlichen einheitlich ist.

**20.** Verfahren nach einem der Ansprüche 17-19, wobei der Schritt (a) durchgeführt wird, während sich die Vielzahl von beschichteten optischen Fasern mit einer Geschwindigkeit von mindestens 10 m/s bewegt.

**21.** Verfahren nach Anspruch 20, wobei der Schritt (a) durchgeführt wird, während sich die Vielzahl der beschichteten optischen Fasern mit einer Geschwindigkeit von mindestens 15 m/s bewegt.

**Revendications**

**1.** Composition de revêtement primaire intérieur photodurcissable pour des fibres optiques comprenant au moins un oligomère photodurcissable, dans laquelle la valeur m de la composition photodurcissable non durcie dans l'équation

$$\tau = \frac{K\lambda\gamma}{1+(\lambda\gamma)^m}$$

est égale ou supérieure à 0,93, dans laquelle $\tau$ est la contrainte de cisaillement (Pa) et $\gamma$ est la vitesse de cisaillement apparente ($sec^{-1}$), et dans laquelle K et $\lambda$ sont des constantes qui sont calculées à l'aide d'un algorithme d'ajustement de courbe incorporé dans un programme logiciel, après une saisie des contraintes de cisaillement correspondantes de la composition observée à des vitesses de cisaillement variables.

**2.** Composition de revêtement primaire intérieur photodurcissable selon la revendication 1, dans laquelle m est égale ou supérieure à 0,95.

**3.** Composition de revêtement primaire extérieur photodurcissable pour des fibres optiques comprenant au moins un oligomère photodurcissable, dans laquelle la valeur m de la composition photodurcissable non durcie dans l'équation

$$\tau = \frac{K\lambda\gamma}{1+(\lambda\gamma)^m}$$

est égale ou supérieure à 0,98, dans laquelle $\tau$ est la contrainte de cisaillement (Pa) et $\gamma$ est la vitesse de cisaillement apparente ($sec^{-1}$), et dans laquelle K et $\lambda$ sont des constantes qui sont calculées à l'aide d'un algorithme d'ajustement de courbe incorporé dans un programme logiciel, après une saisie des contraintes de cisaillement correspondantes de la composition observée à des vitesses de cisaillement variables.

**4.** Composition de revêtement photodurcissable selon une quelconque des revendications 1 à 3, dans laquelle l'au

moins un oligomère photodurcissable contient au moins un groupe acrylate.

**5.** Composition de revêtement photodurcissable selon l'une quelconque des revendications 1 à 4, dans laquelle l'oligomère photodurcissable contient en outre au moins un groupe uréthane.

**6.** Composition de revêtement photodurcissable selon l'une quelconque des revendications 1 à 5, dans laquelle l'acrylate oligomère photodurcissable contient un polyéther aliphatique.

**7.** Composition de revêtement photodurcissable selon l'une quelconque des revendications 1 à 6, dans laquelle l'au moins un oligomère photodurcissable comprend, en moyenne, pas plus de 2 unités de répétition environ.

**8.** Composition de revêtement photodurcissable selon l'une quelconque des revendications 1 à 7, dans laquelle l'au moins un oligomère photodurcissable comprend, en moyenne, pas plus de 1 unité de répétition environ.

**9.** Procédé de préparation d'une fibre optique recouverte comprenant : (a) l'application d'une composition de revêtement primaire intérieur photodurcissable comprenant au moins un oligomère photodurcissable sur une fibre optique, dans laquelle la valeur m de l'équation

$$\tau = \frac{K\lambda\gamma}{1+(\lambda\gamma)^m}$$

est égale ou supérieure à 0,93, et (b) le durcissement de la composition de revêtement photodurcissable pour fournir une fibre optique recouverte, dans laquelle $\tau$ est la contrainte de cisaillement (Pa) et $\gamma$ est la vitesse de cisaillement apparente ($sec^{-1}$), et dans laquelle K et $\lambda$ sont des constantes qui sont calculées à l'aide d'un algorithme d'ajustement de courbe incorporé dans un programme logiciel, après une saisie des contraintes de cisaillement correspondantes de la composition observée à des vitesses de cisaillement variables.

**10.** Procédé selon la revendication 9, dans lequel l'épaisseur du revêtement photodurcissable sur la fibre optique recouverte est sensiblement uniforme.

**11.** Procédé selon l'une quelconque des revendications 9 à 10, dans lequel l'étape (a) est menée pendant que la fibre optique se déplace à une vitesse d'au moins 40 m/sec.

**12.** Procédé de préparation d'une fibre optique recouverte comprenant : (a) l'application d'une composition de revêtement primaire extérieur photodurcissable sur une fibre optique ayant un revètement interne primaire comprenant au moins un oligomère photodurcissable, dans laquelle la valeur m de l'équation

$$\tau = \frac{K\lambda\gamma}{1+(\lambda\gamma)^m}$$

est égale ou supérieure à 0,98, et (b) le durcissement de la composition de revêtement primaire extérieur pour fournir la fibre optique recouverte, dans laquelle $\tau$ est la contrainte de cisaillement (Pa) et $\gamma$ est la vitesse de cisaillement apparente ($sec^{-1}$), et dans laquelle K et $\lambda$ sont des constantes qui sont calculées à l'aide d'un algorithme d'ajustement de courbe incorporé dans un programme logiciel, après une saisie des contraintes de cisaillement correspondantes de la composition observée à des vitesses de cisaillement variables.

**13.** Procédé selon la revendication 12, dans lequel l'épaisseur combinée des compositions de revêtement intérieur et extérieur sur la fibre optique recouverte est sensiblement uniforme.

**14.** Procédé selon l'une quelconque des revendications 9 à 13, dans lequel au moins 80% de la dernière dose de photodurcissement pour la composition de revêtement est appliquée sur la composition de revêtement pendant l'étape (b).

**15.** Procédé selon l'une quelconque des revendications 9 à 14, dans lequel l'étape (a) est menée pendant que la fibre optique se déplace à une vitesse d'au moins 45 m/sec.

**16.** Procédé selon la revendication 15, dans lequel l'étape (a) est menée pendant que la fibre optique se déplace à une vitesse d'au moins 50 m/sec et au moins 80% de la dernière dose de photodurcissement pour la composition de revêtement extérieur est appliquée sur la composition de revêtement pendant l'étape (b).

**17.** Procédé de préparation d'un assemblage de ruban comprenant : (a) l'application d'un matériau de matrice photodurcissable comprenant au moins un oligomère photodurcissable sur la surface extérieure d'une pluralité de fibres optiques recouvertes, dans lequel la valeur m de l'équation

$$\tau = \frac{K\lambda\gamma}{1+(\lambda\gamma)^m}$$

est égale ou supérieure à 0,96, et (b) le durcissement du matériau de matrice photodurcissable, dans lequel $\tau$ est la contrainte de cisaillement (Pa) et $\gamma$ est la vitesse de cisaillement apparente ($sec^{-1}$), et dans lequel K et $\lambda$ sont des constantes qui sont calculées à l'aide d'un algorithme d'ajustement de courbe incorporé dans un programme logiciel, après une saisie des contraintes de cisaillement correspondantes de la composition observée à des vitesses de cisaillement variables.

**18.** Procédé selon la revendication 17, dans lequel m est égal ou supérieur à 0,98.

**19.** Procédé selon l'une quelconque des revendications 17 à 18, dans lequel l'épaisseur du matériau de matrice durci sur l'ensemble de ruban est sensiblement uniforme.

**20.** Procédé selon l'une quelconque des revendications 17 à 19, dans lequel l'étape (a) est menée pendant que la pluralité de fibres optiques recouvertes se déplace à une vitesse d'au moins 10 m/sec.

**21.** Procédé selon la revendication 20, dans lequel l'étape (a) est menée pendant que la pluralité de fibres optiques recouvertes se déplace à une vitesse d'au moins 15 m/sec.

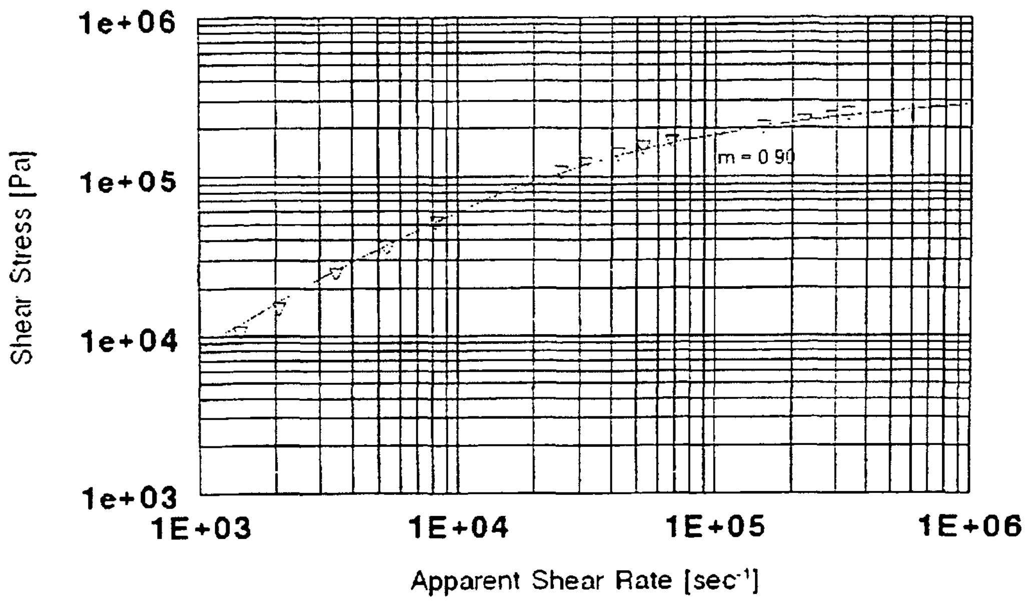
1e+06
1e+05
1e+04
1e+03
Shear Stress [Pa]
m = 0.90
1E+03
1E+04
1E+05
1E+06
Apparent Shear Rate [sec-1]

**FIGURE 1**

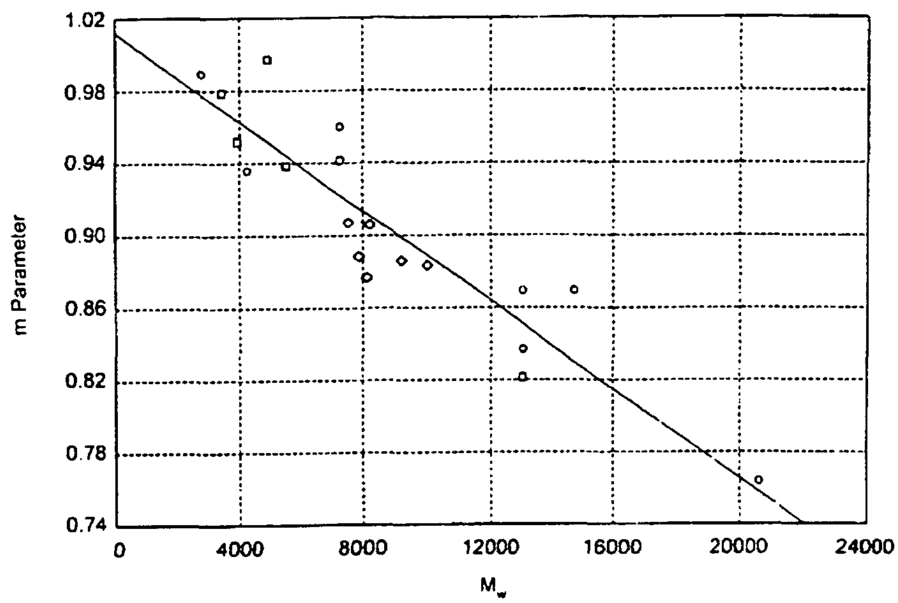
1.02
0.98
0.94
0.90
0.86
0.82
0.78
0.74
m Parameter
0
4000
8000
12000
16000
20000
24000
$M_w$

FIGURE 2